## Europäisches Patentamt
## European Patent Office
## Office européen des brevets

(19)

(11) Veröffentlichungsnummer: **0 132 628**
**B1**

(12)

# EUROPÄISCHE PATENTSCHRIFT

(45) Veröffentlichungstag der Patentschrift:
**11.05.88**

(21) Anmeldenummer: **84107621.9**

(22) Anmeldetag: **30.06.84**

(51) Int. Cl.⁴: **G 01 F 11/26**

(54) **Gerät zur dosierten Ausgabe von Flüssigkeit.**

(30) Priorität: **20.07.83 DE 3326025**

(43) Veröffentlichungstag der Anmeldung:
**13.02.85 Patentblatt 85/7**

(45) Bekanntmachung des Hinweises auf die Patenterteilung:
**11.05.88 Patentblatt 88/19**

(84) Benannte Vertragsstaaten:
**AT BE CH DE FR GB IT LI NL SE**

(56) Entgegenhaltungen:
**BE - A - 726 478**
**US - A - 2 732 104**
**US - A - 2 787 405**
**US - A - 4 061 253**

(73) Patentinhaber: **Weener Plastik GmbH & Co. KG,
Industriestr. 1, D-2952 Weener-Ems (DE)**

(72) Erfinder: **Steiner, Walter, Milchweg 12,
D-2950 Leer-Heisfelde (DE)**
Erfinder: **Fudalla, Manfred, Ringstrasse 19,
D-2952 Weener-Stapelmoor (DE)**

(74) Vertreter: **Rieder, Hans-Joachim, Dr.,
Corneliusstrasse 45 Postfach 11 04 51,
D-5600 Wuppertal 11 (DE)**

## Beschreibung

Die Erfindung bezieht sich auf ein Gerät zur dosierten Ausgabe von Flüssigkeit gemäss den Merkmalen des Oberbegriffes des Anspruches 1.

Bei einem bekannten Gerät der zuvor bezeichneten Art (vgl. DE-A1 3 214 186, insb. Figuren 9 bis 13 und zugehörige Beschreibung) liegen das Zulaufrohr, das Mündungsrohr und der Luftdurchlass, in einer Draufsicht, in einer Linie, die das Gerät etwa diametral durchsetzt. Zum Dosieren wird das Gerät derart gekippt, dass die Flüssigkeit durch das Zulaufrohr in die Dosierkammer eintritt und der Druckausgleich über den Luftdurchlass erfolgt. Um eine funktionsgerechte Handhabung sicherzustellen, kann eine bestimmte Grifflage bei einem derartigen bekannten Gerät ausgebildet sein oder aber es wird eine auffällige Kennzeichnung angebracht.

Weiterhin ist zum Stand der Technik noch die US-A 4 061 253 bekanntgeworden. Aus dieser Druckschrift ist ein Gerät mit einer Dosierkammer bekannt, welches eine nahe dem oberen Rand vorgesehene Öffnung aufweist, die eine gewisse Unabhängigkeit hinsichtlich der notwendigen Kipprichtung ergibt.

Ausgehend von dem zunächst genannten Stand der Technik stellt sich der Erfindung die Aufgabe, ein gattungsgemässes Gerät in herstellungstechnisch einfacher, gebrauchsvorteilhafter Weise so auszubilden, dass eine von der Kipplage unabhängige, schnelle Dosierungsausgabe erreicht wird.

Diese Aufgabe ist bei einem Gerät mit den Merkmalen des Patentanspruches 1 gelöst.

Zufolge solcher Ausgestaltung ist ein herstellungstechnisch einfaches, gebrauchsvorteilhaftes Gerät zur dosierten Ausgabe von Flüssigkeiten erreicht, welches weitgehend unabhängig von bestimmten Kipprichtungen ist. So kann eine aufwendige Gebrauchsanleitung bzw. auffällige Kennzeichnung unterbleiben. Erreicht ist dies durch mindestens drei, in symmetrischer Winkelverteilung angeordnete Zulaufrohre und jeweils winkelmässig zwischen diesen liegenden Luftdurchlassöffnungen für den Druckausgleich der oberen Kammer. Diese Luftdurchlassöffnungen erfüllen dabei noch eine Zusatzfunktion, indem sie zugleich den schnellen Ablauf der Übermenge bewirken. Die Messmenge wird so exakt erreicht. Die entsprechende Vielzahl der Zulaufrohre bringt auch ein schnelleres Füllen der oberen Kammer, zumal die Luftdurchlassöffnungen in der entsprechenden Vielzahl realisiert sind. Weiter ist es von Vorteil, dass die Ausgusskammer, vom Mündungsrohr ausgehend, mit Durchflusszwischenraum in einem sich unterhalb der oberen Kammer erstreckenden Becher angeordnet ist, welcher auf Höhe der Querwand ein Loch besitzt, das mit einer Überlauföffnung in der Ausgusskammer in Verbindung steht. Die Überlauföffnung bestimmt das Füllniveau. Das Loch im Becher bringt zugleich den Druckausgleich zum Vorratsbehälterinneren. Der Durchflusszwischenraum führt zu einem Anfüllen der Ausgusskammer, dies ebenso spontan zufolge der Tatsache, dass dieser Zwischenraum von winkelversetzt zueinanderliegenden Kanälen des Bechers gebildet ist. Hierbei ist es baulich von Vorteil, dass die Wandabschnitte des Bechers zwischen den Kanälen an der Mantelfläche der Ausgusskammer anliegen. Hierbei ist es von Vorteil, dass die Kanäle mit den Luftdurchlassöffnungen auf einer durch die Längsmittelachse des Gerätes gehenden Geraden angeordnet sind, so dass sich in Bezug auf die Kanäle eine ebenfalls gleichwinklige Verteilung ergibt. Schliesslich ist es noch von Vorteil, dass der Mündungsbereich des Mündungsrohres einen auswärtsgerichteten Kragen bildet, dessen Unterseite in drehsichernden Eingriff tritt zu den Enden der Zulaufrohre. Auf diese Weise lässt sich die lagegerechte Ausrichtung der Durchbrechungen von Becher und Ausgusskammer sicher herbeiführen.

Der Gegenstand der Erfindung ist nachstehend anhand eines zeichnerisch veranschaulichten Ausführungsbeispieles näher erläutert. Es zeigt:

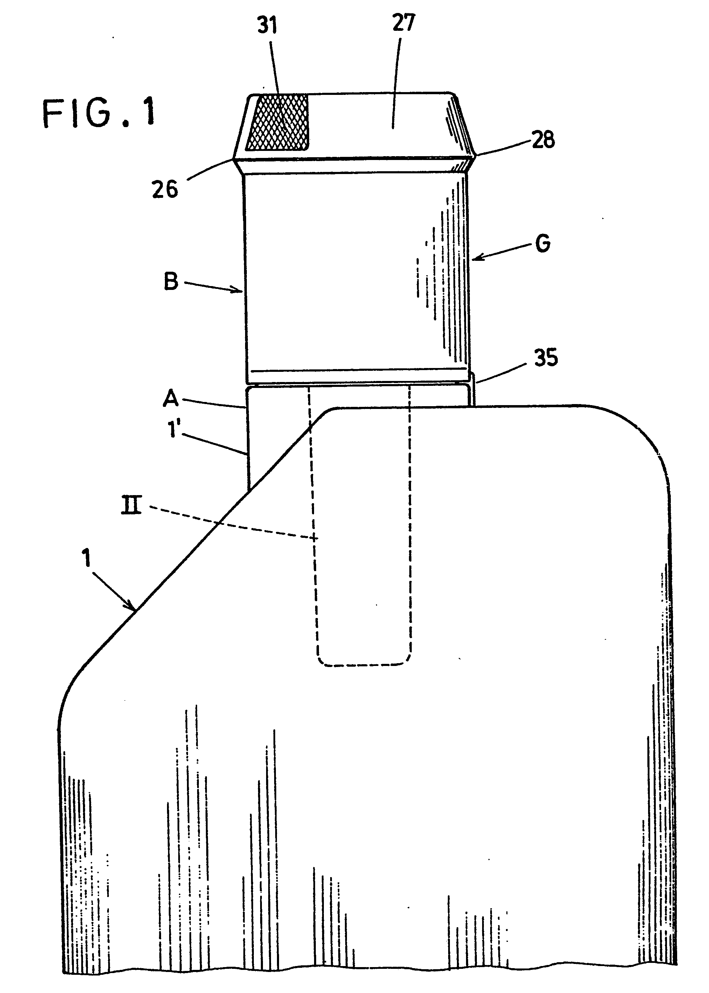

Fig. 1 das mit dem Vorratsbehälter, beispielsweise einem Flaschenhals, verbundene Gerät in Seitenansicht und etwa natürlichem Massstab,

Fig. 2 das Gerät im Vertikalschnitt,

Fig. 3 den Schnitt gemäss Linie III-III in Fig. 2

Fig. 4 den Schnitt gemäss Linie IV-IV in Fig. 2

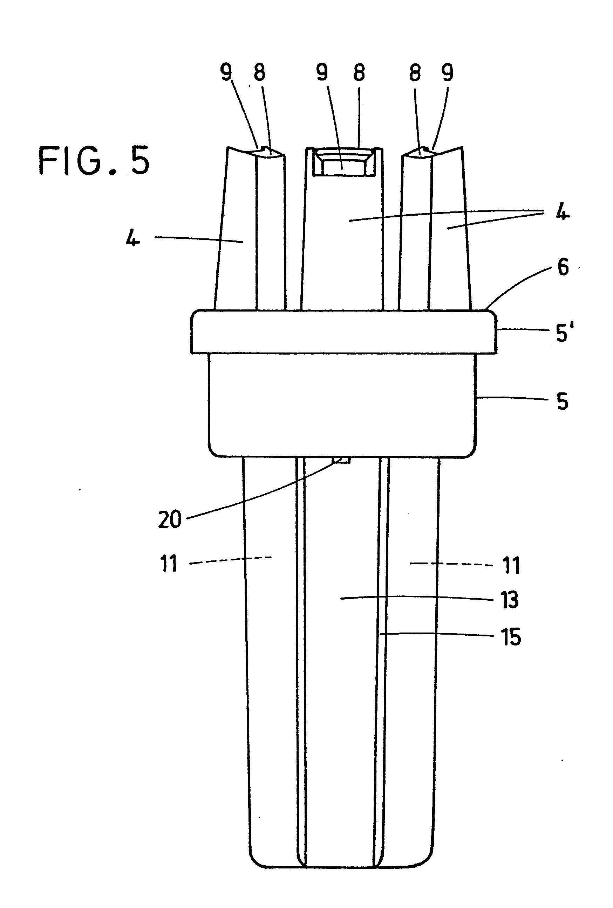

Fig. 5 den die drei Zulaufrohre aufweisenden Becher als Einsatzteil in isolierter Wiedergabe und

Fig. 6 den Schnitt gemäss Linie VI-VI in Fig. 2

Das auf den Hals 1' eines Vorratsbehälters 1 aufsetzbare Gerät zur dosierten Ausgabe von Flüssigkeit 2 besteht aus einem zweiteiligen Gehäuse G, das von einer mittelständigen Querwand 3 in eine obere Kammer I und eine darunterliegende Ausgusskammer II unterteilt ist. Die obere Kammer 1 steht über drei, in symmetrischer Winkelverteilung um die Längsmittelachse y-y des Geräts angeordnete Zulaufrohre 4 mit dem Vorratsbehälter-Innenraum 1", also der Flüssigkeit 2, in Verbindung. Die Zulaufrohre gehen von der Querwand 3 aus und weisen nach oben, d.h. in Ausgaberichtung. Sie wurzeln in der topfbildenden Ringwand 5 des einen, als Einsatz gestalteten Teiles A des Gehäuses. Der Topfrand 6 ist zu einer Steckrinne 7 umgebördelt und überfängt dichtend den abgesetzten Endbereich 1"" des Halses 1'. Der parallel zur Ringwand 5 verlaufende, nach unten weisende Kragenabschnitt trägt das Bezugszeichen 5'. Die Zulaufrohre 4 überragen den Topfrand 6 um das Mass der Topftiefe. Zum freien Ende hin verjüngt sich der Strömungsquerschnitt der Zulaufrohre 4. Letztere sind oberseitig von einem nach innen schräg abfallenden Dach 8 überfangen. Unterhalb des Daches schliesst eine radial auswärtsgerichtete, fensterartige Austrittsöffnung 9 an.

Vorratsbehälterseitig geht die topfbodenbildende Querwand 3 in einen querschnittsreduzierten, zylindrischen bzw. schwach konischen Becher 10 über. Dessen Höhe entspricht etwa der zweieinhalbfachen Topftiefe. Der Becher ist integraler Bestandteil des Teiles A. Er umgibt mit Durchflussspiel × die Ausgusskammer 2. Das Durchflussspiel x wird von drei gleichwinkelig versetzten, sich in Längsrichtung des Bechers erstreckenden Kanälen 11 gebildet, welche im Bereich des Becherbodens 12 zusammentreffen. Erreicht sind die Kanäle 11 durch eine umlaufende Mäander-Faltung der Becherwand (vergl. Fig. 6). Deren Wandabschnitte 13 zwischen den Kanälen liegen an der Mantelfläche 14 in der Ausgusskammer II an. Letztere ist zylindrisch gestaltet. Die Kanalschmalwände 15 sind senkrecht auf die Längsmittelachse y-y des Gerätes G ausgerichtet.

Der Boden 16 der Ausgusskammer II weist ein zentrales Durchflussloch 17 auf. Der Boden 16 steht in einem Abstand von etwa der radialen Breite (×) der Kanäle 11 über dem Boden 12 des Bechers 10.

Zwischen den Zulaufrohren 4 weist die Querwand 3 ebenfalls in gleicher Winkelverteilung Luftdurchlassöffnungen 18 auf. Über diese findet der Druckausgleich für die obere Kammer I statt. Ausserdem dienen die drei Luftdurchlassöffnungen als Ablauföffnungen für die überschüssige Flüssigkeit. Die Kanäle 11 und Luftdurchlassöffnungen 18 sind auf einer gemeinsamen radialen R liegend angeordnet. Das sie bildende Loch verbreitert sich in Erstreckungsrichtung des Mundstückrohres 19.

Etwa auf Höhe der Querwand 3 weist der Becher 10 ein fensterartiges Loch 20 auf. Letzteres steht mit einer Überlauföffnung 21 der Ausgusskammer II in Verbindung. Letztere bestimmt den Füllspiegel Sp in der Ausgusskammer II.

Das Loch 20 ist in Bezug auf Überlauföffnung 21 etwas tiefer gesetzt. Die vorratsbehälterseitige Öffnungskante 21' liegt etwa auf der Lochmitte und fluchtet mit dem höhengleich mit der Öffnungskante 21 abschliessenden Ende des dortigen Zulaufrohres 4.

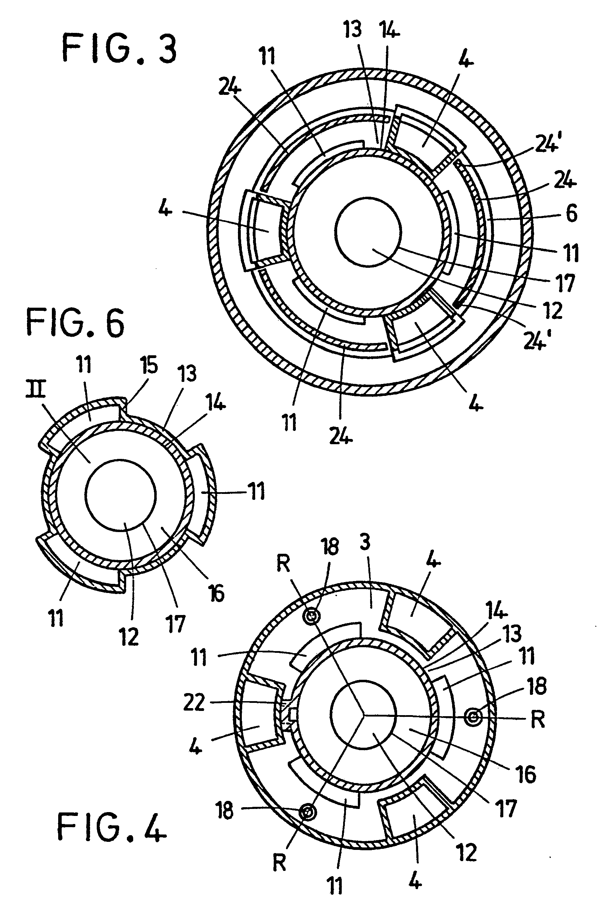

Im Bereich der Überlauföffnung 21 ist dem das Mundüngsrohr 19 formende Teil B ein Nocken 22 angeformt (vergl. Fig. 4). Letzterer tritt gegen den Rücken des dortigen Zulaufrohres 4. Dieser Rücken ist als Kreisringabschnitt gestaltet. Die Schmalwände der etwa viereckigen Zulaufrohre 4 erstrecken sich senkrecht zur Längsmittelachse y-y.

Um die Ausrichtung von Loch 20 und Überlauföffnung 21 sicherzustellen, gehen von der Unterseite eines auswärtsgerichteten Kragens 23 des das Mündungsrohr 19 bildenden Teiles B Vorsprünge 24 aus zum drehsicheren Eingriff in die Freiräume zwischen den Enden der Überlaufrohre 4. Es handelt sich bezüglich dieser Vorsprünge um eine unterbrochene, vertikal ausgerichtete Ringwand, deren vertikale Stirnenden 24' unmittelbar vor den Schmalwänden der Zulaufrohre 4 enden.

Der Kragen 23 formt eine trichterförmige Giesstülle 25, welche einseitig in eine scharfe periphere Lippe 26 übergeht. Letztere überragt etwas die zylindrische Mantelwand des kappenartigen Teiles B.

Dem Teil B ist zugleich ein Klappdeckel 27 angeformt. Dieser steht über ein Filmscharnier 28 damit in Verbindung.

Von der Deckenunterseite des Klappdeckels 27 geht ein die Mündung des Mündungsrohres 19 verschliessender Ringstopfen 29 aus. Letzterer greift mit einem Ringwulst 30 in eine formentsprechende Nut an der Innenwandung des Mündungsrohres 19 ein. Zum erleichterten Erfassen des im Grunde kegelstumpfförmigen Klappdeckels sind zwei senkrecht zur Deckel-Klappebene liegende Einziehungen 31 realisiert. Letztere liegen an einer vom Filmscharnier 28 möglichst weit entfernten Stelle. Die eigentliche Greiffläche weist eine Rauhung auf.

Am innenseitigen Endbereich trägt das Teil B eine Ringrippe 32. Letztere wirkt mit einer Rastrippe 33 des Behälterhalses 1' zusammen.

Teil A und Teil B werden ebenfalls durch Rastmittel zusammengehalten, indem unmittelbar unter dem Kragenabschnitt 5' des Teiles A an der Innenwand des Teiles B falls eine Rastrippe 34 berücksichtigt ist. Letztere wird vom umgefalteten Topfrand 6 überfahren bis schliesslich das behälterseitige Stirnende sich hinter die in Schüttrichtung liegende Rastrippe 34 legt.

Auch zwischen dem Gerät G und dem Behälter 1 kann eine Drehsicherung berücksichtigt sein. Beim Ausführungsbeispiel ist dies durch einen dem Behälter angeformten Vorsprung 35 erreicht, der in eine formentsprechende Nische 36 des Gerätes eingreift.

In der entsprechenden Verrastungsstellung liegt der Kragen 23 auf den entsprechend schräg ausgerichteten Dächern 8 der Zulaufrohre. Aufgrund der gleichen Winkelverteilung ergibt sich dadurch eine Art stabilisierter Dreipunktauflage.

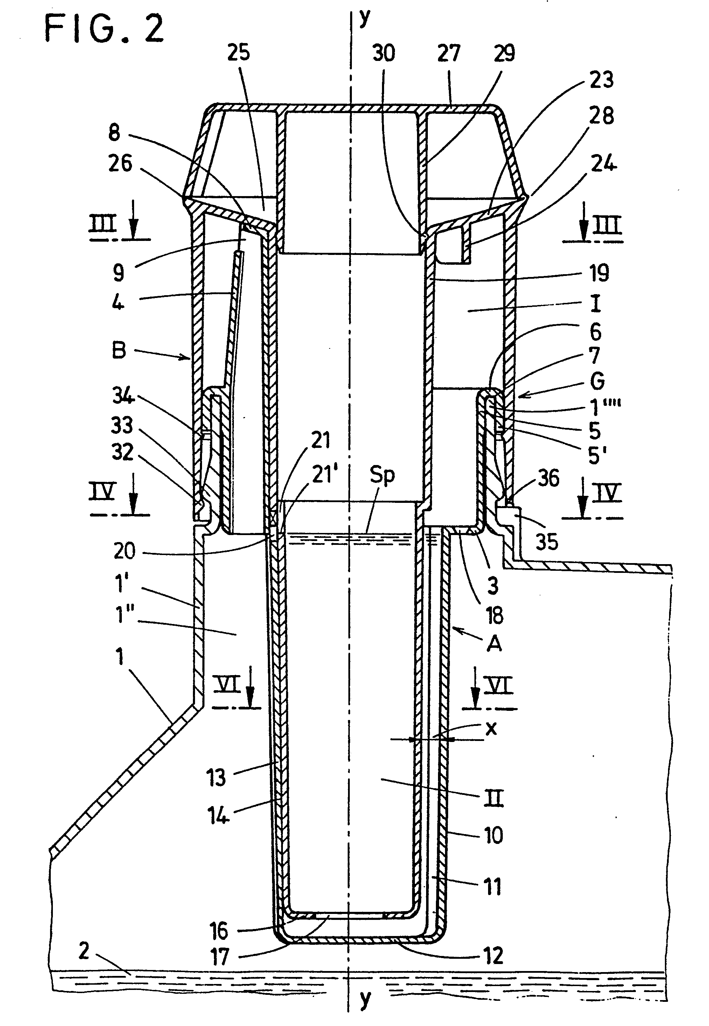

Die Funktion des Gerätes ist wie folgt: Der mit dem erfindungsgemässen Gerät bestückte Vorratsbehälter wird nach Öffnen des Klappdeckels 27 in eine richtungsmässig beliebige Kipplage gebracht derart, dass das Gerät nach unten weist. Hierbei stürzt über alle drei Zulaufrohre 4 Flüssigkeit 2 in die als Flutkammer wirkende obere Kammer I. Der Druckausgleich in der oberen Kammer findet dabei über die Luftdurchlassöffnungen 18 statt. Entsprechend ergibt sich ein schnelles Anfüllen. Nach diesem ersten Kippen in die Tieflage wird das Gerät wieder so gestellt, wie es sich aus Fig. 2 ergibt. In dieser normalen Standlage fliesst die in die obere Kammer I gelangte Flüssigkeit 2 über die vom Becher 10 gebildeten Kanäle 11 in die Ausgusskammer II, dies unter Passieren des Durchflussloches 17. Überschüssige Flüssigkeit läuft aus der oberen Kammer I über die drei Luftdurchlassöffnungen (18) ab. Die schliessendische Dosierkorrektur wird durch die Überlauföffnung 21 erzielt, welche den Spiegel Sp definiert.

Nun wird das Gerät erneut in die Kipplage überführt. Dabei wird die in die Ausgusskammer II gelangte, dosierte Flüssigkeitsmenge durch das zentrale Mündungsrohr 19 hindurch ausgegeben, dies unter Kippen in jede beliebige Richtung (Scharnierbereich ausgenommen).

Der Druckausgleich zum Flascheninneren geschieht über das Loch 20 bzw. die Überlauföffnung 21.

Durch Anziehen des Bodens 12 und der damit verbundenen Volumenverringerung ist bezüglich der Dosiermenge eine Korrekturmöglichkeit gegeben. Eine solche Einziehung durchsetzt das Durchflussloch natürlich mit dem erforderlichen Spiel.

## Patentansprüche

1. Gerät zur dosierten Ausgabe von Flüssigkeit aus einem Vorratsbehälter (1) durch ein in die Tieflage tretendes Mündungsrohr (19) hindurch, welche Ausgabe erst beim zweiten Umwenden erfolgt, wobei ein von einer Querwand (3) in eine obere Kammer (I) und eine tieferliegende Ausgusskammer (II) unterteiltes topfförmiges Gehäuse vorgesehen ist, dessen Ausgusskammer (II) und obere Kammer (I) über ein Durchflussloch (17) miteinander verbunden sind, welche Querwand (3) von einem oberhalb derselben mündenden Zulaufrohr (4) durchsetzt ist und welches Mündungsrohr (19) oberhalb der Querwand (3) mündet, wobei neben dem Mündungsrohr (19) ein die Querwand (3) durchsetzender Luftdurchlass (18) angeordnet ist, gekennzeichnet durch mindestens drei in symmetrischer Winkelverteilung angeordnete Zulaufrohre (4) und jeweils winkelmässig zwischen diesen liegenden Luftdurchlassöffnungen (18).

2. Gerät nach Anspruch 1, dadurch gekennzeichnet, dass die Ausgusskammer (II), vom Mündungsrohr (19) ausgehend, mit Durchflusszwischenraum (x) in einem sich unterhalb der oberen Kammer (I) erstreckenden Becher (10) angeordnet ist, welcher etwa auf Höhe der Querwand (3) ein Loch (20) besitzt, welches mit einer Überlauföffnung (21) der Ausgusskammer (II) in Verbindung steht.

3. Gerät nach Anspruch 2, dadurch gekennzeichnet, dass der Durchflusszwischenraum (x) durch winkelversetzt zueinanderliegende Kanäle (11) des Bechers (10) gebildet ist.

4. Gerät nach Anspruch 3, dadurch gekennzeichnet, dass die Wandabschnitte (13) des Bechers (10) zwischen den Kanälen (11) an der Mantelfläche (14) der Ausgusskammer (II) anliegen.

5. Gerät nach Anspruch 2, dadurch gekennzeichnet, dass die Kanäle (11) und die Luftdurchlassöffnungen (18) auf einer durch eine Längsmittelachse (y-y) des Gerätes gehenden Geraden liegen.

6. Gerät nach Anspruch 2, dadurch gekennzeichnet, dass der Mündungsbereich des Mündungsrohres (19) einen einen Trichter formenden, auswärtsgerichteten Kragen (23) bildet, dessen Unterteil drehsichernd mit den Enden der Zulaufrohre (4) in Eingriff ist.

## Claims

1. Device for the apportioned dispensing of liquid from a supply container (1) through a mouth tube (19) going into the low position, which dispensing only takes place upon turning over for the second time, a pot-shaped housing, subdivided by a transverse wall (3) in an upper chamber (I) and a lower-lying pouring chamber (II), being provided, the pouring chamber (II) and upper chamber (I) of which are interconnected by a flow hole (17), which transverse wall (3) has passing through it a feed tube (4) opening out above the same, and which mouth tube (19) opens out above the transverse wall (3), there being arranged next to the mouth tube (19) an air passage (18) passing through the transverse wall (3), characterized by at least three feed tubes (4) arranged in symmetrical angular distribution and air passage openings (18) in each case arranged angularly between the latter.

2. Device according to Claim 1, characterized in that the pouring chamber (II), emerging from the mouth tube (19), is arranged with intermediate flow space (x) in a beaker (19) extending underneath the upper chamber (I), which beaker has, approximately on a level with the transverse wall (3), a hole (20), which is in connection with an overflow opening (21) of the pouring chamber (II).

3. Device according to Claim 2, characterized in that the intermediate flow space (x) is formed by channels (11) of the beaker (10) offset at an angle to one another.

4. Device according to Claim 3, characterized in that the wall sections (13) of the beaker (10) between the channels (11) bear against the circumferential surface (14) of the pouring chamber (II).

5. Device according to Claim 2, characterized in that the channels (11) and the air passage openings (18) lie on a straight line passing through a longitudinal centre axis (y-y) of the device.

6. Device according to Claim 2, characterized in that the mouth region of the mouth tube (19) forms an outwardly directed collar (23), forming a funnel, the lower part of which collar is in rotationally-securing engagement with the ends of the feed tubes (4).

## Revendications

1. Appareil pour la distribution de liquides par doses à partir d'un réservoir de stockage (1) à l'aide d'un tube de dégorgement (19) venant en position basse et dont la fonction n'est réalisée qu'au cours d'un deuxième retournement, comportant un carter en forme de pot et divisé par une paroi latérale (3) en une chambre supérieure (I) et en une chambre de dégorgement (II) située en-dessous, la chambre de dégorgement (II) et la chambre supérieure (I) étant reliées l'une à l'autre par un trou d'écoulement (17), la paroi transversale (3) étant traversée par un tube d'écoulement (4) débouchant au-dessus de cette paroi et le tube de dégorgement (19) débouchant au-dessus de la paroi transversale (3) tandis qu'un passage d'air (18) traversant la paroi transversale (3) est prévu à côté du tube de dégorgement (19), caractérisé par au moins trois tubes d'écoulement (4) disposés selon une distribution angulaire symétrique et trois ouvertures de passage d'air (18) disposées angulairement chacune entre les tubes d'écoulement.

2. Appareil selon la revendication 1, caractérisé en ce que la chambre de dégorgement (II) est disposée à partir du tube de dégorgement (19) avec un espace intermédiaire d'écoulement (×) dans un godet (10) s'étendant en-dessous de la chambre supérieure (I), ce godet comportant sensiblement à la hauteur de la paroi transversale (3) un trou (20) qui est relié à une ouverture de débordement (21) de la chambre de dégorgement (II).

3. Appareil selon la revendication 2, caractérisé en ce que l'espace intermédiaire d'écoulement (×) est formé par des canaux (11) du godet (10) qui sont décalés angulairement les uns par rapport aux autres.

4. Appareil selon la revendication 3, caractérisé en ce que les sections de paroi (13) du godet (10) se trouvent entre les canaux (11) sur la paroi d'enveloppe (14) de la chambre de dégorgement (II).

5. Appareil selon la revendication 2, caractérisé en ce que les canaux (11) et les ouvertures d'écoulement d'air (18) se trouvent sur une droite passant par un axe longitudinal médian (y-y) de l'appareil.

6. Appareil selon la revendication 2, caractérisé en ce que la zone de déversement du tube de dégorgement (19) forme un collet (23) dirigé vers l'extérieur et en forme d'entonnoir et dont la partie inférieure est en prise de façon bloquée en rotation avec les extrémités des tubes d'amenée (4).

FIG.1

FIG. 2

0 132 628

FIG. 3

FIG. 6

FIG. 4

FIG. 5